# EUROPEAN PATENT APPLICATION

(11) **EP 3 722 066 A1**
(43) Date of publication of application: **14.10.2020**
(21) Application number: 18886902.8
(22) Date of filing: 20.11.2018
(51) Int. Cl.: B29C 45/20

(54) **RESIN TEMPERATURE DETECTING DEVICE FOR INJECTION MOLDING MACHINE**

(30) Priority: 04.12.2017 JP 2017232248
(71) Applicant: Omron Corporation, Kyoto-shi, Kyoto 600-8530 (JP)
(72) Inventor: YAMADA, Takaaki, Kyoto 619-0283 (JP); SAKAGUCHI, Takashi, Kyoto 619-0283 (JP)
(74) Representative: Becker, Eberhard
(86) International application number: PCT/JP2018/042764
(87) International publication number: WO 2019/111693

(57) **Abstract**

This resin temperature detecting device for an injection molding machine detects the temperature of resin (12) flowing through a resin flow passage (11) in an injection molding machine provided with a nozzle part (1) having the resin flow passage (11). A heat sensing part (SP) of a temperature sensor (10) is provided at a heat sensing position in the vicinity of a leading end part (N) of the resin flow passage (11) in the nozzle part (1), the leading end part being the portion of the resin flow passage (11) where the inner diameter is smallest.

## Description

### [Technical Field]

The present invention relates to a resin temperature detecting device for an injection molding machine configured to detect a temperature of a resin flowing through a resin flow passage in an injection molding machine.

### [Background Art]

A process for executing injection molding includes an injection process of causing a screw in a cylinder to advance forward and injecting a molten resin accumulated at a front portion of the screw into a mold, a pressure holding process of holding a pressure for a while, a plasticizing process of accumulating the molten resin at a front portion of the cylinder while melting the resin for a next cycle until the resin, with which the mold is filled, is cooled and cured, an injection device retreating process of causing an injection device to retreat such that the molten resin accumulated at a leading end of a nozzle is not cooled and cured due to the mold, and the like.

When the aforementioned processes are repeatedly performed, the resin in the nozzle located between the mold and the cylinder after the molten resin in the cylinder is fed to the mold through the nozzle in an injection operation this time and the mold is filled with the resin is then fed to the mold at the time of next injection. Therefore, it is necessary to manage the resin remaining in the nozzle in a state that is optimal for filling the mold.

Patent Literature 1 describes a tip nozzle for an injection molding machine that includes a temperature sensor such as a thermocouple for managing a temperature of the resin and that is configured to manage the temperature by turning on and off a heater on the basis of the detected temperature.

### [Citation List]

### [Patent Literature]

[Patent Literature 1] Japanese Patent Laid-Open No. 2003-200474

### [Summary of Invention]

### [Technical Problem]

In the tip nozzle disclosed in Patent Literature 1, the thermocouple is provided in a region that is covered with the heater attached to an outer periphery. However, since an interval from the position of the thermocouple to the resin flow passage, through which the resin is injected into the mold, is large, there is a problem that it is not possible to precisely detect the temperature of the resin to be injected into the mold and thus to highly precisely control the temperature of the resin in the resin flow passage.

Thus, an objective of the invention is to provide a resin temperature detecting device for an injection molding machine capable of highly precisely detecting a temperature of a resin to be injected into a mold and highly precisely controlling the temperature of the resin.

### [Solution to Problem]

As an example of the present disclosure, there is provided a resin temperature detecting device for an injection molding machine, which is provided in the injection molding machine provided with a nozzle part having a resin flow passage to detect a temperature of a resin flowing through the resin flow passage, in which a heat sensing part of a temperature sensor is disposed at a heat sensing position on an injection side of a resin in the nozzle part and in a vicinity of a portion at which an inner diameter of the resin flow passage is smallest.

With this configuration, it is possible to highly precisely detect the temperature of the resin remaining in the resin flow passage and the temperature of the resin immediately before the resin is injected into the mold.

Also, in the example of the disclosure, the resin flow passage of the nozzle part is thick at a base part and is thin on the injection side of the resin. In addition, the heat sensing position is a position that is closer to the injection side than to the base part of the resin flow passage.

With this configuration, it is possible to more precisely detect the temperature of the resin immediately before the resin is injected into the mold.

Also, in the example of the disclosure, the heat sensing position is in a recessed range from an outer surface of a sprue bush, which is a resin inlet part of a mold, to a nozzle touch part.

With this configuration, it is possible to more precisely detect the temperature of the resin immediately before the resin is injected into the mold.

Also, in the example of the disclosure, the heat sensing position is a position at a shortest distance within 1 mm from an inner wall of the resin flow passage.

With this configuration, a response speed of the temperature sensor increases, and it is possible to address a case in which molding is repeated at a short cycle.

Also, in the example of the disclosure, the nozzle part has a hole penetrating therein, and the temperature sensor is inserted into the hole.

With this configuration, it is possible to dispose the temperature sensor at a position that is closer to the leading end of the nozzle.

Also, in the example of the disclosure, the nozzle part has a groove in an outer surface, the temperature sensor is a thermocouple with an outer periphery covered with a sheath, and the sheath of the temperature sensor is disposed along the groove.

With this configuration, the temperature sensor is easily secured to the nozzle part, and the position of the temperature sensor is easily determined with high precision.

### [Advantageous Effects of Invention]

According to the invention, it is possible to obtain a resin temperature detecting device for an injection molding machine capable of highly precisely detecting a temperature of a resin to be injected into a mold and highly precisely controlling the temperature of the resin.

### [Brief Description of Drawings]

FIG. 1 is a diagram illustrating a configuration of a resin temperature detecting device for an injection molding machine according to an embodiment of the invention.
FIG. 2 is a sectional view illustrating a configuration of a nozzle part 1 of the injection molding machine.
FIG. 3 is a block diagram illustrating a configuration of a temperature control device of the injection molding machine.
FIG. 4 is a sectional view illustrating a configuration of the nozzle part of the injection molding machine, in which an attachment position of a temperature sensor is different from that illustrated in FIG. 2.
FIG. 5 is a sectional view illustrating a configuration of the nozzle part of the injection molding machine, in which the attachment position of the temperature sensor is different from that illustrated in FIG. 2.
FIG. 6 is a sectional view illustrating an example of structures of the nozzle part 1, a mold 101, and a sprue bush 110 of the injection molding machine.

### [Description of Embodiments]

Hereinafter, an embodiment for carrying out the invention will be described with reference to several drawings.

### - Application example

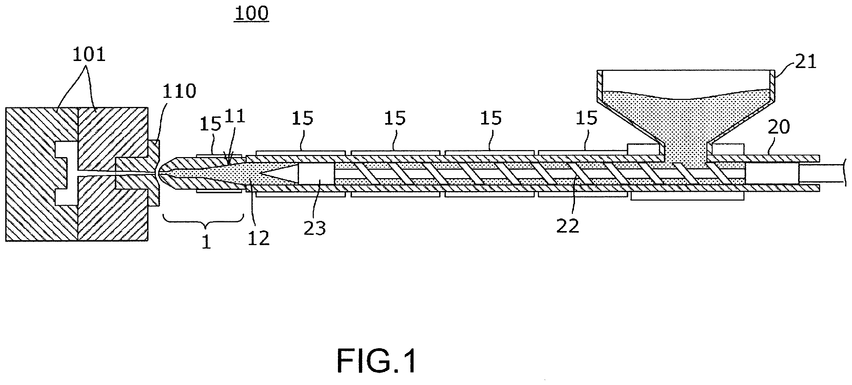

First, an example to which the invention is applied will be described with reference to FIG. 1. FIG. 1 is a diagram illustrating a configuration of a resin temperature detecting device for an injection molding machine according to an embodiment of the invention.

As illustrated in FIG. 1, the resin temperature detecting device for an injection molding machine according to the embodiment is provided in an injection molding machine 100 used with a mold 101. The injection molding machine 100 includes a nozzle part 1 having a resin flow passage 11. A resin 12 in the resin flow passage 11 is heated and melted by a band-shaped heater 15. A temperature sensor is disposed at a leading end of the nozzle part 1 in the vicinity of a portion at which an inner diameter of the resin flow passage 11 is smallest.

With this configuration, it is possible to highly precisely detect the temperature of the resin immediately before the resin is injected into the mold 101.

### - Configuration example

Next, a configuration of the resin temperature detecting device for an injection molding machine according to the embodiment of the invention will be described with reference to the drawings. As described above, FIG. 1 is a diagram illustrating the configuration of the resin temperature detecting device for an injection molding machine according to the embodiment of the invention.

As illustrated in FIG. 1, the injection molding machine 100 includes the nozzle part 1, a cylinder 20, the heater 15, a hopper 21, and the like. In the cylinder 20, the resin flow passage 11, a screw 22, a check valve 23, and the like are provided. Also, illustration of the temperature sensor is omitted in FIG. 1 in order to avoid complicating the drawing.

The nozzle of the injection molding machine 100 is provided with a sprue bush 110 on which the nozzle of the injection molding machine 100 abuts for guiding the resin into the mold 101. However, a structure between the sprue bush 110 and the mold 101 is illustrated in a simplified manner in FIG. 1.

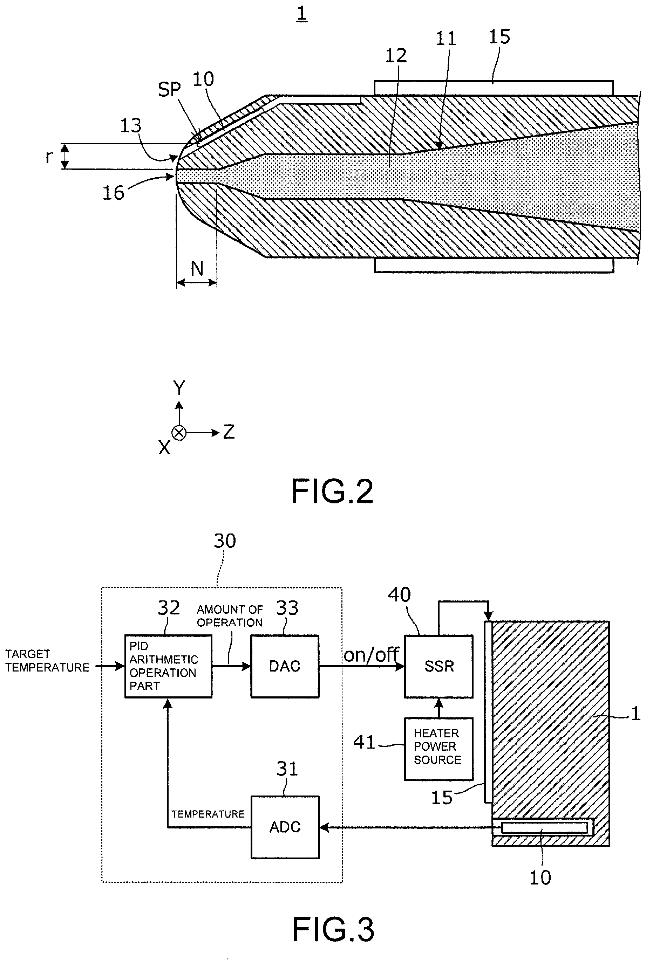

FIG. 2 is a sectional view illustrating a configuration of the nozzle part 1, in particular, in the injection molding machine 100.

An injection side of a resin in the nozzle part 1 has substantially a conical shape. Also, a projecting end of the nozzle part 1 on the injection side is substantially a spherical surface. A through-hole 13 is formed inside the nozzle part 1 along an outer surface of the conical shape. The temperature sensor 10 is inserted into the through-hole 13. The temperature sensor 10 is a thermocouple with an outer periphery covered with a sheath in one example. Although a lead wire is drawn out of the temperature sensor 10, illustration thereof is omitted in FIG. 2. The thermocouple is disposed at a heat sensing part SP in the vicinity of the leading end part of the temperature sensor 10. Therefore, the temperature sensor 10 detects the temperature in the vicinity of the heat sensing part SP, in particular. The position of the heat sensing part SP is also a "heat sensing position" in the invention.

At the nozzle part 1, the resin flow passage 11 has an inner diameter that gradually decreases from the base part toward the leading end part N located on the injection side (in the -Z direction among directions illustrated in FIG. 2). Also, the inner diameter is the smallest at the leading end part N. The resin injection port 16 of the projecting end of the nozzle part 1 is in contact with a resin inlet port of the sprue bush 110 illustrated in FIG. 1.

The temperature sensor 10 is disposed such that the heat sensing part SP of the temperature sensor 10 is located in the vicinity of the leading end part N, which is a portion at which the inner diameter of the resin flow passage 11 is smallest.

In addition, the position of the heat sensing part SP is a position that is closer to the leading end part N than to a base part (a part with a thick diameter other than the leading end part N) of the resin flow passage 11 in the example illustrated in FIG. 2.

Also, the heat sensing part SP of the temperature sensor 10 is located within a range of the leading end part N when seen in a Y-axis direction in this example.

Also, the heat sensing part SP is at a position at a shortest distance (the distance in a direction (Y-axis direction) of an outer surface of the nozzle from an inner wall of the resin flow passage 11 in the state illustrated in FIG. 2) within 1 mm from the inner wall of the resin flow passage 11. In other words, an interval r between the heat sensing part SP and the resin flow passage 11 is within 1 mm.

Since the heat sensing part SP of the temperature sensor 10 is located at a position that is close to the resin 12 flowing through the resin flow passage 11 in this manner, it is possible to highly precisely detect the temperature of the resin remaining in the resin flow passage 11 and the temperature of the resin immediately before the resin is injected into the mold.

FIG. 3 is a block diagram illustrating a configuration of the temperature control device of the injection molding machine 100. In FIG. 3, the nozzle part 1 and the temperature sensor 10 are conceptually illustrated.

The temperature control device includes a temperature sensor 10, a temperature adjuster 30, a heater power source 41, a solid state switch 40, and a heater 15. The temperature control device is adapted to control the amount of heat generated by the heater 15 on the basis of a temperature detection signal from the temperature sensor 10 provided at the nozzle part 1.

The temperature adjuster 30 is configured of an A/D converter 31, a PID arithmetic operation part 32, and a D/A converter 33. The A/D converter 31 converts an electromotive force of the temperature sensor 10 (thermocouple) into digital data, and the PID arithmetic operation part 32 obtains an amount of operation on the basis of an externally set target temperature and an output value of the A/D converter 31 and outputs data of the amount of operation to the D/A converter 33. The D/A converter 33 generates a PWM signal in accordance with the amount of operation. The PWM signal is given as an on/off signal for the solid state switch 40.

The temperature of the heater 15 is controlled to follow the target temperature through the operations of the temperature control device illustrated in FIG. 3.

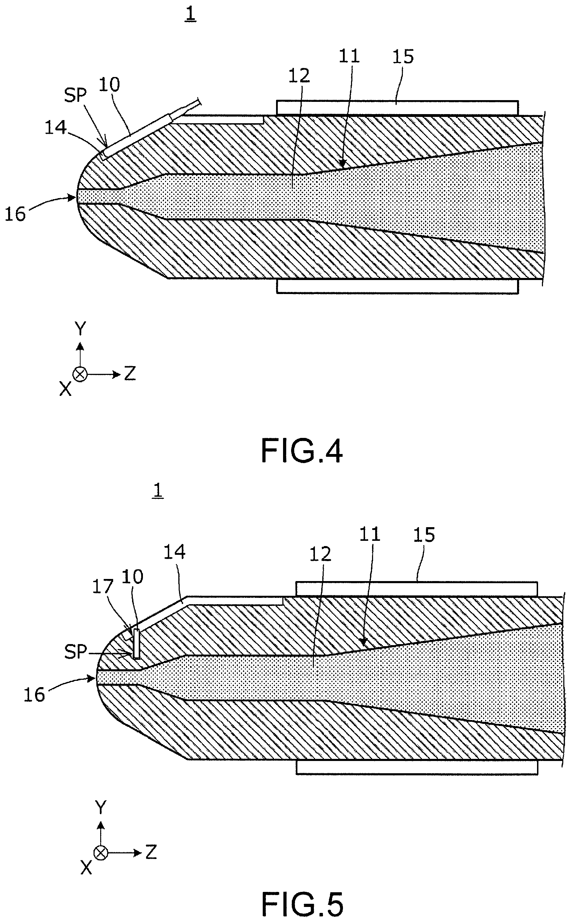

FIG. 4 is a side view illustrating a configuration of the nozzle part 1 of the injection molding machine 100 in which an attachment position of the temperature sensor 10 is different from that illustrated in FIG. 2.

In this example, a groove 14 is formed along an outer surface of the portion with the substantially conical shape of the nozzle part 1, and the temperature sensor 10 is attached to the groove 14. Specifically, the sheath of the temperature sensor 10 is bonded to the groove 14. Other configurations are similar to those illustrated in FIG. 2.

FIG. 5 is a sectional view illustrating a configuration of the nozzle part 1 of the injection molding machine 100 in which the attachment position of the temperature sensor 10 is different from that illustrated in FIG. 2.

In this example, the groove 14 is formed along the outer surface of the part with the substantially conical shape of the nozzle part 1, and further, a hole 17 dug in the Y-axis direction from the groove 14 is formed. The temperature sensor 10 is inserted into the hole 17. Other configurations are similar to those illustrated in FIG. 2.

If the hole 17 at which the temperature sensor 10 is provided is pierced toward the resin flow passage 11 as illustrated in FIG. 5, the heat sensing part SP of the temperature sensor 10 is located closer to the resin flow passage 11. In this manner, it is possible to detect the temperature of the resin at a portion that is close to the projecting end of the nozzle part 1. Also, a response speed with respect to a change in temperature of the resin increases.

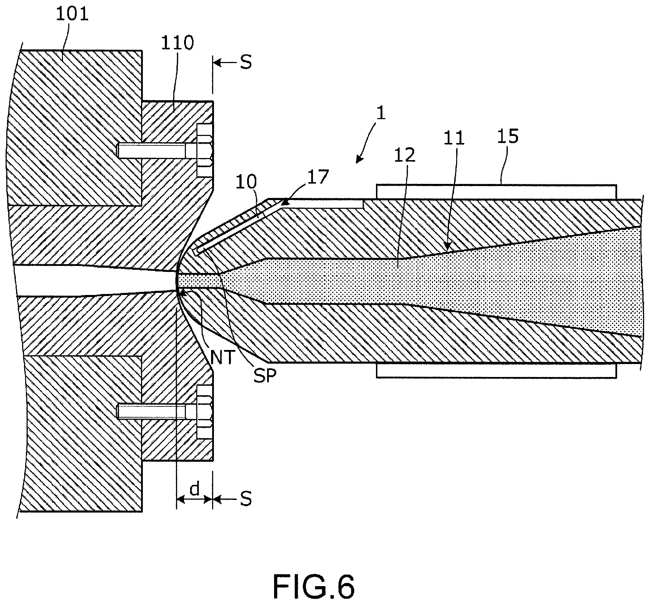

FIG. 6 is a sectional view illustrating an example of structures of the nozzle part 1 of the injection molding machine 100, the mold 101, and the sprue bush 110.

The injection side of the resin in the nozzle part 1 has substantially a conical shape. Also, the projecting end of the nozzle part 1 on the injection side is substantially a spherical surface. The hole 17 is formed along an outer surface with the conical shape inside the nozzle part 1. The temperature sensor 10 is inserted into the hole 17. Other configurations are the same as those illustrated in FIG. 2.

The sprue bush 110 is attached to a resin injection part of the mold 101. The projecting end of the nozzle part 1 abuts the nozzle touch part NT of the sprue bush 110. The nozzle touch part NT of the sprue bush 110 is recessed from an outer surface S-S of the sprue bush 110.

The heat sensing part SP of the temperature sensor is within a recessed range d from the outer surface S-S of the sprue bush 110 to the nozzle touch part NT.

With this configuration, it is possible to detect the temperature of the resin at a position that is closer to the mold.

Finally, it is a matter of course that the aforementioned embodiment for carrying out the invention is described only for illustrative purposes on all points and is not restrictive. It is possible for those skilled in the art to appropriately add modifications and changes. The scope of the invention is indicated not by the aforementioned embodiment but by the claims. Further, the scope of the invention includes changes from the embodiment within a scope that is equivalent to the scope of the claims.

### [Reference Signs List]

- d: Recessed range
- N: Leading end part
- NT: Nozzle touch part
- r: Heat sensing position/resin flow passage inner wall distance
- S: Outer surface of sprue bush
- SP: Heat sensing part
- 1: Nozzle part
- 10: Temperature sensor
- 11: Resin flow passage
- 12: Resin
- 13: Through-hole
- 14: Groove
- 15: Heater
- 16: Resin injection port
- 17: Hole
- 20: Cylinder
- 21: Hopper
- 22: Screw
- 23: Check valve
- 30: Temperature adjuster
- 31: A/D converter
- 32: PID arithmetic operation part
- 33: D/A converter
- 40: Solid state switch
- 41: Heater power source
- 100: Injection molding machine
- 101: Mold
- 110: Sprue bush

## Claims

1. A resin temperature detecting device for an injection molding machine, wherein the resin temperature detecting device is provided in the injection molding machine provided with a nozzle part having a resin flow passage to detect a temperature of a resin flowing through the resin flow passage, **characterized in that** the resin temperature detecting device for an injection molding machine comprising:
a heat sensing part of a temperature sensor, being disposed at a heat sensing position on an injection side of a resin in the nozzle part and in a vicinity of a portion at which an inner diameter of the resin flow passage is smallest.

2. The resin temperature detecting device for an injection molding machine according to claim 1, wherein
the resin flow passage of the nozzle part is thick at a base part and is thin on the injection side, and
the heat sensing position is a position that is closer to the injection side than to the base part of the resin flow passage.

3. The resin temperature detecting device for an injection molding machine according to claim 1 or claim 2, wherein
the heat sensing position is in a recessed range from an outer surface of a sprue bush, which is a resin inlet part of a mold, to a nozzle touch part.

4. The resin temperature detecting device for an injection molding machine according to any one of claims 1 to 3, wherein
the heat sensing position is a position at a shortest distance within 1 mm from an inner wall of the resin flow passage.

5. The resin temperature detecting device for an injection molding machine according to any one of claims 1 to 4, wherein
the nozzle part has a hole penetrating therein, and
the temperature sensor is inserted into the hole.

6. The resin temperature detecting device for an injection molding machine according to any one of claims 1 to 5, wherein
the nozzle part has a groove in an outer surface,
the temperature sensor is a thermocouple with an outer periphery covered with a sheath, and
the sheath of the temperature sensor is disposed along the groove.
